# EUROPEAN PATENT SPECIFICATION

(11) **EP 2 936 874 B1**
(45) Date of publication and mention of the grant of the patent: **05.05.2021**
(21) Application number: 13779413.7
(22) Date of filing: 01.10.2013
(51) Int. Cl.: H04W 36/00, H04W 36/36, H04W 36/08

(54) **INFORMING NETWORK WHEN UE IN CELL_FACH STATE DETECTS THAT CELL RESELECTION SHOULD BE PERFORMED**
BEREITSTELLUNG VON INFORMATIONEN AN EIN NETZWERK ÜBER DIE FESTSTELLUNG EINES BENUTZERGERÄTS IM CELL_FACH-ZUSTAND, DASS EINE ZELLENNEUAUSWAHL DURCHGEFÜHRT WERDEN SOLLTE
INFORMER UN RÉSEAU QUAND L'UE DANS UN ÉTAT CELL_FACH DÉTECTE QUE LA RESÉLECTION DE CELLULE DOIT ÊTRE EFFECTUÉE

(30) Priority: 24.12.2012 US 201261745715 P
(43) Date of publication of application: 28.10.2015
(73) Proprietor: Telefonaktiebolaget LM Ericsson (publ), 164 83 Stockholm (SE)
(72) Inventor: PRADAS, Jose Luis, SE-11827 Stockholm (SE); SHI, Nianshan, S-176 74 Järfälla (SE); KWONG, Waikwok, S-171 51 Solna (SE)
(74) Representative: Ericsson
(86) International application number: PCT/SE2013/051133
(87) International publication number: WO 2014/104958

(56) References cited:
- EP-A1- 2 557 842
- US-A1- 2009 168 728
- US-A1- 2009 247 161
- "3rd Generation Partnership Project; Technical Specification Group Radio Access Network; User Equipment (UE) procedures in idle mode and procedures for cell reselection in connected mode (Release 11)", 3GPP STANDARD; 3GPP TS 25.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.0.0, 25 September 2012 (2012-09-25), pages 1-52, XP050649957, [retrieved on 2012-09-25]
- HUAWEI ET AL: "Cell reselection during uplink transmission with common E-DCH", 3GPP DRAFT; R2-125499 CELL RESELECTION DURING UPLINK TRANSMISSION WITH COMMON E-DCH, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG2, no. New Orleans, USA; 20121112 - 20121116 3 November 2012 (2012-11-03), XP050667447, Retrieved from the Internet: URL:http://www.3gpp.org/ftp/tsg_ran/WG2_RL 2/TSGR2_80/Docs/ [retrieved on 2012-11-03]
- NOKIA CORPORATION ET AL: "On Mobility", 3GPP DRAFT; R2-080996 MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080204, 4 February 2008 (2008-02-04), XP050138790, [retrieved on 2008-02-04]
- "Chapter 11 - Measurements and Procedures of the UE in RRC Modes" In: "UMTS", 1 January 2007 (2007-01-01), ISTE, London, UK, XP055109651, ISBN: 978-1-90-520971-2 pages 291-320, DOI: 10.1002/9780470612279.ch11, paragraph [11.2] paragraph [11.2.1] paragraph [11.3.2]

## Description

### TECHNICAL FIELD

The present invention relates generally to wireless communication networks, and in particular to mechanisms for reporting cell reselection.

### BACKGROUND

Modern wireless communication networks have experienced unprecedented growth, both in technological sophistication (and concomitant features and capabilities) and in terms of geographic deployment and number of subscribers. This growth is facilitated - and indeed is largely possible as a result of - the codification of key technical details of wireless communication network structure and operation in a series of industry-wide specifications. The Third Generation Partnership Project (3GPP) is a collaboration between groups of telecommunications associations, which propose, agree upon, and publish technical standards for third generation networks and beyond. The 3GPP publishes the standards governing the operation of the Universal Mobile Telecommunications System (UMTS), a successor to the Global System for Mobile Communications (GSM) and General Packet Radio Services (GPRS). The Radio Access Network (RAN) of UMTS is the UMTS Terrestrial Radio Access Network (UTRAN). The 3GPP has further evolved the UTRAN and GSM based radio access network technologies, specifying, e.g., High Speed Downlink/Uplink Packet Access (HSDPA/HSUPA), Multiple-Input Multiple-Output (MIMO) transmission schemes, and the like. For example an uplink transport channel improving capacity and data throughput is the Enhanced Dedicated Channel (E-DCH), comprising numerous physical layer channels.

The specifications governing operation of each of these technological advances are published as a major revision, or "release" of the 3GPP standard. Mobile terminals, more generally referred to as user equipment (UE), are designed in conformance with, and certified to be compatible with, a particular release of the 3GPP standard. For example, the first UMTS network is specified in Release 99 (released in 2000). HSDPA is specified in Release 5 (2002); HSUPA is specified in Release 6 (2004). Enhanced UTRA (E-UTRA, also known as Long Term Extension, or LTE) is specified in Release 7 (2007).

The Radio Resource Control (RRC) protocol for UMTS and Wideband CDMA (WCDMA) handles the control plane signaling between User Equipment (UEs, also known as mobile stations) and the UTRAN. RRC defines a plurality of states in which UEs reside. Each state has defined activity and associated power consumption. To conserve battery life, UEs transition to successively lower power-consuming states as inactivity timers trigger. In decreasing order of power consumption, the RRC Connected Mode states are CELL_DCH (Dedicated Channel), CELL_FACH (Forward Access Channel, approximately 50% the power consumption of CELL_DCH), CELL_PCH (Cell Paging Channel, approximately 2% of CELL_DCH power consumption), and URA_PCH (UTRAN Registration Area Paging Channel).

In Release 99, the Forward Access Channel (FACH) is used for downlink (DL) transmission for UEs in the CELL_FACH state. The Radio Network Controller (RNC) is responsible for the scheduling of the transmission. The Node-B (the UTRAN base station) simply transmits the data the RNC sends down for a Transmission Time Interval (TTI). In Release 7, the CELL_FACH state was enhanced to receive the High-Speed Downlink Shared Channel (HS-DSCH). The RNC may send available data for a UE to the Node-B all at once and delegate the scheduling task to the Node-B. However, the rules for the UE to maintain mobility using cell reselection did not change. If a UE determines that a cell reselection should be performed, it does so without informing the network ahead of time. The network is only aware of the change after having received a cell update transmitted by the UE in a new (target) cell. In the meantime, the original (source) Node-B may continue transmitting the data it has remaining in the buffer for that UE. This data will be lost since the UE is no longer monitoring that cell.

Enhanced Uplink in CELL_FACH state was introduced in Release 8. When a UE has a common E-DCH resource, the UE can perform measurements which may be later used to perform cell re-selection; however, the UE is not allowed to perform cell re-selection while the UE has a common E-DCH resource. Only when the UE has released the common E-DCH resource can the UE perform a cell re-selection. Thus, if the UE has a common E-DCH resource and moves from one cell to another, the UE cannot perform cell reselection to the new cell. Accordingly, the UE may lose coverage and the RRC connection.

Further Enhancements for CELL FACH are being standardized in Release 11. Some of these enhancements may result in UEs remaining longer in CELL_FACH state and transmitting more data in this state than in prior 3GPP Releases.

The 3GPP Release 7 and 8 enhancements of the CELL FACH state with HS-DSCH and E-DCH transmissions have thus created a problem when a UE needs to reselect another cell during data transmission. When receiving data on HS-DSCH, the UE may simply reselect another cell, leaving possibly large quantities of data at the prior cell, waiting to be transmitted. When transmitting data on a common E-DCH, the UE is required to perform measurements and cell ranking, but it is forbidden to perform cell reselection. If the cell ranking indicates that a cell reselection to another cell is warranted, the UE is likely to be introducing considerable interference to the other cell, and it may even be in danger of losing coverage.

The Release 11 improvements do not address these problems. In Release 11, UEs may remain in CELL FACH state longer, and may transmit more data. This implies that UEs located in the cell edge may have a greater effect on other surrounding cells by means of interference while the UE has a common E-DCH resource. Additionally, if the transmission is to persist longer, the probability of UEs moving from one cell to another is higher. Hence, the drop call probability is also increased. The invention proposed in the present application aims to modify the embodiments as described in 3GPP TS 25.304.

The Background section of this document is provided to place embodiments of the present invention in technological and operational context, to assist those of skill in the art in understanding their scope and utility. Unless explicitly identified as such, no statement herein is admitted to be prior art merely by its inclusion in the Background section.

### SUMMARY

The invention is defined by the appended claims. The following presents a simplified summary of the disclosure in order to provide a basic understanding to those of skill in the art. This summary is not an extensive overview of the disclosure and is not intended to identify key/critical elements of embodiments of the invention or to delineate the scope of the invention. The sole purpose of this summary is to present some concepts disclosed herein in a simplified form as a prelude to the more detailed description that is presented later.

According to one or more embodiments described and claimed herein, mechanisms are provided for several aspects of network communications relating to a UE reporting cell reselection. These include how the network configures or indicates to the UE that it should report cell reselection to the network; how the UE indicates a cell reselection to the network; and how the RNC indicates to the Node-B that the UE is in need of cell reselection.

One embodiment relates to a method, performed by a UE operative in a wireless communication network. Cell reselection criteria are received in a System Information Broadcast (SIB) from the network. The SIB includes information instructing the UE to report to the network whenever cell reselection criteria are satisfied. Neighboring cells are monitored for possible cell reselection. An indication that cell reselection criteria are satisfied is transmitted to the network, in response to the SIB instruction.

Yet another embodiment relates to User Equipment (UE) operative in a wireless communication network. The UE includes radio circuits including a transceiver operative to wirelessly communicate with one or more Node-Bs; memory operative to store software; and a processor operatively connected to the memory and transceiver. The processor is operative to receive cell reselection criteria in a System Information Broadcast (SIB) from the network, the SIB including information instructing the UE to report to the network whenever cell reselection criteria are satisfied; monitor neighboring cells for possible cell reselection; and transmit to the network an indication that cell reselection criteria are satisfied, in response to the SIB instruction.

### BRIEF DESCRIPTION OF THE DRAWINGS

The present invention will now be described more fully hereinafter with reference to the accompanying drawings, in which embodiments of the invention are shown. However, this invention should not be construed as limited to the embodiments set forth herein. Rather, these embodiments are provided so that this disclosure will be thorough and complete, and will fully convey the scope of the invention to those skilled in the art. Like numbers refer to like elements throughout.
Figure 1 is a diagram of a UE in a first cell, moving toward a second cell.
Figure 2 is a diagram of a UE moving into a second cell and triggering a cell reselection.
Figure 3 is a diagram of a UE moving into a second cell, but remaining connected to a first cell.
Figure 4 is a flow diagram of a UE triggering cell reselection and sending a report to the network.
Figure 5 is a flow diagram of a UE triggering cell reselection and sending a report to the network only when it does not have a common E-DCH resource.
Figure 6 is a functional block diagram of a RNC.
Figure 7 is a functional block diagram of a UE.

### DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims

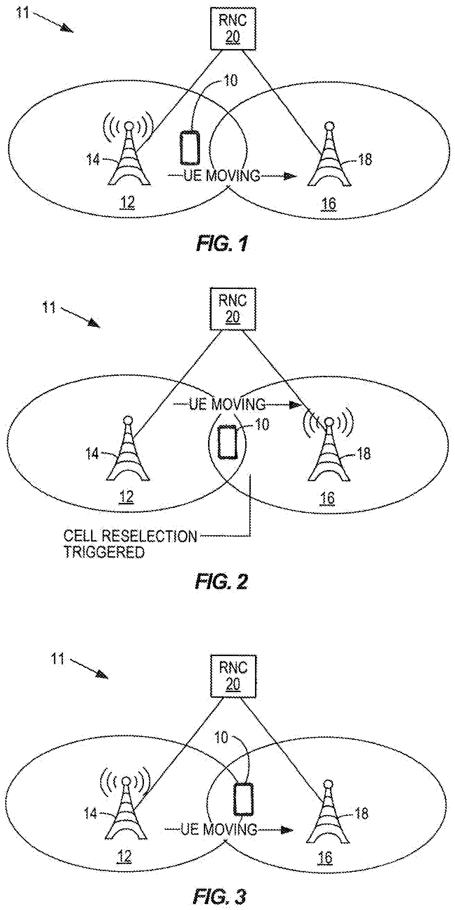

Figure 1 depicts one problem with a UE in CELL_FACH state with HS-DSCH transmissions. A UE 10 in a wireless communication network 11 is connected to a first cell 12, established by a Node-B 14, as indicated by the RF emissions from the Node-B 14 tower. The UE 10 is moving toward a second cell 14, established by a Node-B 18. In this depiction, both Node-Bs 14, 18 are controlled by the same Radio Network Controller (RNC) 20, which may additionally control a plurality of other Node-Bs (not shown). Alternatively, the Node-B 18 may be controlled by a different RNC 20 than the Node-B 14.

The RNC 20 may download significant data to the first Node-B 14 in cell 12, for the Node-B 14 to schedule transmission to the UE 10. However, as depicted in Figure 2, as the UE 10 moves into the region of the second cell 16, the UE 10 will perform a cell reselection to cell 16, as indicated by RF emissions from the Node-B 18 tower. The UE 10 then stops monitoring the first cell 12 and monitors only the second cell 16. This leaves the Node-B 14 at the first cell 12 with data to transmit to the UE 10, which data may be lost.

Figure 3 illustrates a different problem. If the UE 10 had a common E-DCH resource in the first cell 12, it is not allowed to perform a cell reselection until the E-DCH resource is released. As the UE 10 moves toward and into a second cell 16, it must remain attached to the first cell 12, as indicated by RF emissions from the Node-B 14 tower. The UE 10 thus projects interference into cell 16, and may lose its connection to cell 12, causing loss of RRC and a dropped call. The Release 11 proposals that the UE 10 remain in CELL_FACH longer, and transmit more data, exacerbate both of these problems.

Cell reselection criteria for the CELL_FACH state is currently specified in the System Information Broadcast (SIB). According to embodiments of the present invention, additional information is included in the SIB to instruct the UE to inform the network 11 that the cell reselection criteria have been satisfied in the following cases:
(1) Any time cell reselection criteria is satisfied regardless of whether or not the UE has acquired a common E-DCH resource. In one embodiment, the reporting is limited to only when the UE has acquired a common E-DCH resource.
(2) The UE is allocated a common E-DCH. Additional information is included in the SIB that instructs the UE to periodically inform the network, after the first trigger, for as long as the cell reselection criterion remains satisfied. In one embodiment, in addition to the information for case (2), additional information may be included in the SIB to instruct the UE to suspend uplink transmission (except for HARQ retransmissions) until the completion of the cell reselection procedure.
(3) The UE has recently been receiving data on the HS-DSCH and the time elapsed since the last data reception is less than the value of a broadcast inactivity timer. Another broadcast parameter may be used to instruct the UE to wait for a certain amount of time before performing the cell reselection. The cell reselection indication may be sent on RACH or on a common E-DCH, depending on the capability of the UE and what has been configured in the network.

Alternatively, different cell reselection criteria may be specified in the SIB specifically for case (2) and for case (3).

The UE may convey a cell reselection to the network in several ways. The following embodiments depict independent and mutually exclusive methods, unless otherwise clearly indicated.

In one embodiment, the UE reports, in an RRC message, the event triggered "cell re-selection." This event can be sent, for example, in a Measurement Report message. In the measurement report message, the UE will use the measurement identity indicated in the configuration given to the UE, or a default measurement identity may be used. The default measurement identity may be within the range from 1 to 16. In addition, the following information elements may be reported independently of each other:
In one embodiment, the UE reports an indication of whether cell reselection is triggered for an UTRA cell, GSM cell, or E-UTRA cell. In another embodiment, the UE also indicates a set of cells: for example, one or more UTRA cells, one or more GSM cells, and/or one or more E-UTRA cells. Combinations of RANs may be reported as well. For example, the UE could report cell reselection for one or more UTRA cells and also one or more E-UTRA cells. If a UTRA cell is reported, the UARFCN is included. If a GSM cell is reported, the ARFCN and Band Indicator are included. If a E-UTRA cell is reported, the EARFCN is included.
In another embodiment the Traffic Volume Measurement is reported if the network broadcasted the IE "Traffic volume measurement system information" in System Information Block Type 11.
In another embodiment, the UE sends a MAC-i PDU which includes the Scheduling Information. The scheduling information contains the following fields: UE Power Headroom (UPH), Total E-DCH Buffer Status (TEBS), Highest priority Logical channel Buffer Status (HLBS), and Highest priority Logical channel ID (HLID). Since the Node-B does not necessarily have knowledge of the reasons why a UE sends the Scheduling Information; it is required that a value in at least one of the fields in the Scheduling Information is reserved. This value, or values in different fields, will indicate that a UE is sending the Scheduling Information because a cell-reselection is triggered in the UE. TEBS information may be needed to assist the Node-B to evaluate the next actions. Hence, in one embodiment the UE reports the TEBS as in the prior art. UPH is also a necessary parameter. Hence, the two candidate fields to be used to indicate cell re-selection are the HLBS and/or HLID.
Another embodiment comprises the first embodiment described above, and in addition, the UE behavior with respect to the MAC-i/is entity. When a measurement report is triggered to indicate cell re-selection as described for the first embodiment 1, the Scheduling Information is also triggered.

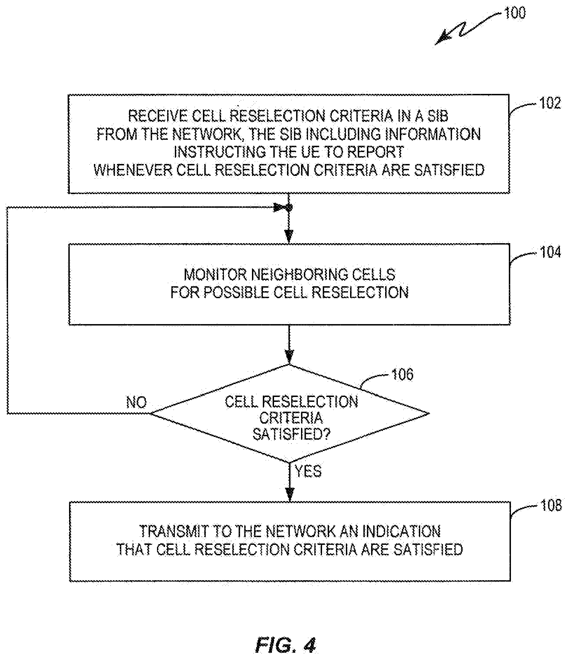

Figure 4 depicts a method 100 performed by a UE 10 operative in a wireless communication network 11, according to embodiments described above. Initially, the UE 10 receives cell reselection criteria in a System Information Broadcast (SIB) from the network 11 (block 102). The SIB includes information instructing the UE 10 to report to the network 11 whenever cell reselection criteria are satisfied. The UE 10 periodically or continuously monitors neighboring cells 16 for possible cell reselection (block 104), comparing measurements against the cell reselection criteria received in the SIB. If the cell reselection criteria are satisfied (block 106), the UE 10 transmits to the network 11 an indication that cell reselection criteria are satisfied (block 108). In this manner, the network 11 is alerted to a pending cell reselection event, and take appropriate action to avoid the loss of data stockpiled at the Node-B 14 of the cell 12 to which the UE 10 is currently connected (see Figures 1-2).

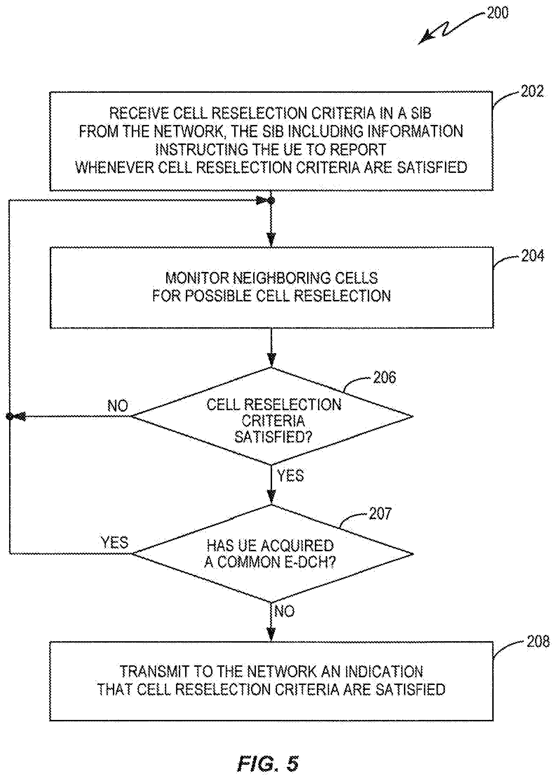

Figure 5 depicts a method 200 performed by a UE 10 operative in a wireless communication network 11, according to other embodiments described above. In Figure 5, blocks 202, 204, 206, and 208 correspond to blocks 102, 104, 106, and 108, respectively, of Figure 4. In addition, Figure 5 depicts the decision block 207, in which the UE 10 determines whether it has acquired a common E-DCH. In this method 200, only if cell reselection criteria are satisfied (block 206) and the UE 10 has a common E-DCH (block 207) does the UE 10 transmit to the network 11 an indication that cell reselection criteria are satisfied (block 108). In this manner, the network 11 may take appropriate action to prevent the UE 10 from causing excessive interference in a neighboring cell 16, when the UE 10 is prevented from actually performing an indicated cell reselection procedure due to the common E-DCH resource.

An RNC 20 may convey a cell reselection, reported by a UE 10 as described above, to a Node-B 14, 18 in several ways.

When the RNC 20 receives a measurement report from a UE 10 indicating a cell reselection, as described above, the network 11 may decide to perform a reconfiguration. The RNC 20 performs admission control of the dedicated resources, and will setup a dedicated Radio Link at the target cell The RNC 20 will remove the common resources from the source cell 12. In this case, the network 11 will send a reconfiguration message to the UE 10. This reconfiguration message may, for instance, move the UE 10 to CELL_DCH To maintain data flow to the UE 10 of data already delivered to the Node-B 12, the RNC 20 provides an activation time to the old resource to complete its data transfer. This is in addition to the known use of Connection Frame Number (CFN) used to indicate an activation time for the new resources.

Upon receiving the measurement report from a UE 10 indicating cell reselection, the RNC 20 may suspend downlink data transmission to the UE's current serving Node-B 12, and indicate to the Node-B 12 that the UE has indicated the need for cell re-selection. The RNC 20 may additionally indicate to the Node-B 12 the Traffic Volume Measurement reported by the UE, or other UE- or network-relevant information. The new indications can be added to a Node B Application Part (NBAP) or Radio Network Subsystem Application Part (RNSAP) control plane message. Alternatively, they can be added to the lub/lur user plane frame protocol.

Upon receiving the measurement report from a UE 10 indicating cell reselection, the RNC 20 does not suspend downlink data transmission to the UE's current serving Node-B 12, but does indicate to the Node-B 12 that it may release common E-DCH resources allocated to the UE 10. The RNC 20 may additionally indicate to the Node-B 12 the Traffic Volume Measurement reported by the UE, or other UE- or network-relevant information. The new indications can be added to a NBAP/RNSAP control plane message, or to the lub/lur user plane frame protocol.

The Node-B 12 may decide on further actions, such as releasing the common E-DCH resource by means of the Enhanced Absolute Grant Channel (E-AGCH). These actions may be based on the indication provided to the Node-B 12 as described above, on the amount of data the Node-B 12 has in its buffer for the UE 10, on the Traffic Volume Measurement (TVM) value provided by the RNC 20, and/or the Total E-DCH Buffer Status (TEBS) value indicated by the UE 10, or any relevant information provided by the UE 10, RNC 20, or information obtained or calculated by the Node-B 12.

If the Node-B 12 decides that the UE 10 may perform cell reselection, the Node-B 12 will explicitly release the common E-DCH resource. Following this, the UE 10 will perform a cell reselection before continuing to transmit data on the uplink.

When the Node-B 12 receives the Scheduling Information (in the embodiment of UE 10 reporting cell reselection via a MAC-i PDU, as described above), the Node-B 12 sends the indication and TEBS value to the RNC 20. The RNC 20 may then perform the actions indicated in the various embodiments described above.

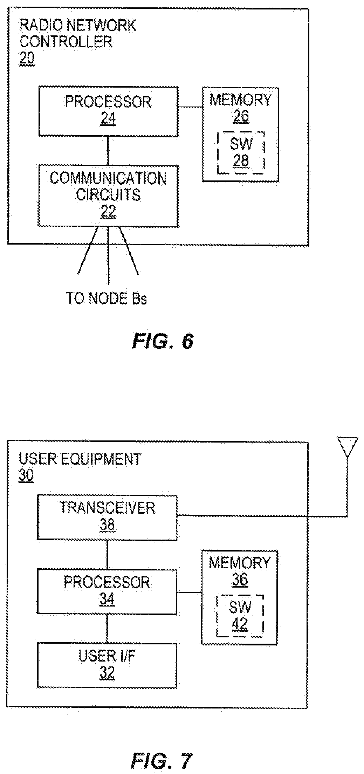

Figure 6 depicts a RNC 20 As those of skill in the art are aware, a RNC 20 is a network 11 node controlling one or more Node-Bs 14, 18. The RNC 20 includes communication circuitry 22 operative to exchange data with other network nodes; a processor 24; and memory 26. The memory 26 is operative to store, and the processor 24 operative to execute, software 28 which when executed is operative to cause the RNC 20 to perform methods and functions described herein.

Figure 7 depicts a UE 30 operative in embodiments of the present invention. As those of skill in the art are aware, a UE 30 is a device, which may be battery-powered and hence mobile, operative within a wireless communication network. The UE 30 includes a user interface 32 (display, touchscreen, keyboard or keypad, microphone, speaker, and the like); a processor 34; memory 36; and a radio circuitry, such as one or more transceivers 38, antennas 40, and the like, to effect wireless communication across an air interface to one or more Node-Bs 14, 18. The UE 30 may additionally include features such as a camera, removable memory interface, short-range communication interface (Wi-Fi, Bluetooth, and the like), wired interface (USB), and the like (not shown in Fig. 7). According to embodiments of the present invention, the memory 36 is operative to store, and the processor 34 operative to execute, software 42 which when executed is operative to cause the UE 30 to perform methods and functions described herein

In all embodiments, the processor 24, 34 may comprise any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored-program, general-purpose processors, such as a microprocessor or Digital Signal Processor (DSP), together with appropriate software; or any combination of the above.

In all embodiments, the memory 26, 36 may comprise any non-transient machine-readable media known in the art or that may be developed, including but not limited to magnetic media (*e.g.,* floppy disc, hard disc drive, etc.), optical media (*e.g.,* CD-ROM, DVD-ROM, etc.), solid state media (*e.g*., SRAM, DRAM, DDRAM, ROM, PROM, EPROM, Flash memory, solid state disc, etc.), or the like.

In all embodiments, the radio circuitry may comprise one or more transceivers 38 used to communicate with one or more other transceivers via a Radio Access Network according to one or more communication protocols known in the art or that may be developed, such as any of the 3GPP Releases described above. The transceiver 38 implements transmitter and receiver functionality appropriate to the Radio Access Network links (e.g., frequency allocations and the like). The transmitter and receiver functions may share circuit components and/or software, or alternatively may be implemented separately.

In all embodiments, the communication circuitry 22 may comprise a receiver and transmitter interface used to communicate with one or more other nodes over a communication network according to one or more communication protocols known in the art or that may be developed, such as Ethernet, TCP/IP, SONET, ATM, or the like. The communication circuitry 22 implements receiver and transmitter functionality appropriate to the communication network links (e.g., optical, electrical, and the like). The transmitter and receiver functions may share circuit components and/or software, or alternatively may be implemented separately.

Embodiments of the present invention provide numerous advantages over prior art implementations of the 3GPP specifications. In particular, they mitigate or prevent data loss when a UE performs a cell reselection while data remains buffered at the former Node-B. Additionally, embodiments described herein mitigate or eliminate interference, and possibly dropped calls, caused by a UE moving into a new cell but being unable to perform a cell reselection due to having been allocated common E-DCH resources.

The present invention may, of course, be carried out in other ways than those specifically set forth herein as long as changes are within the range of the appended claims.

## Claims

1. A method, by a user equipment, UE, (10) in a CELL_FACH state with High-Speed Downlink Shared Channel, HS-DSCH, transmissions being operative in a wireless communication network (11), the method **characterized by**:
receiving cell reselection criteria in a System Information Broadcast, SIB, instruction from the wireless communication network (11), the SIB instruction instructing the UE (10) to report to the wireless communication network (11) whenever the cell reselection criteria are satisfied;
monitoring neighboring cells (16) for a possible cell reselection; and
transmitting, to the wireless communication network (11), an indication that the cell reselection criteria are satisfied, in response to the SIB instruction,
wherein the indication is transmitted to a radio network controller, RNC, (20) for allowing the RNC (20) to indicate to a base station to release common Enhanced-Dedicated Channel, E-DCH, resources allocated to the UE (10), wherein the indication that the cell reselection criteria are satisfied is indicated by transmitting, by the UE (10), an event triggered "cell reselection" in a Measurement Report message, and wherein transmitting a cell reselection indicator in Highest priority Logical channel Buffer Status, HLBS, and/or Highest priority Logical channel ID, HLID, fields of Scheduling Information is triggered by the transmission of the event triggered Measurement Report message.

2. The method of claim 1, wherein the SIB instruction further indicates that the cell reselection criteria has been satisfied only when the UE (10) acquires the common E-DCH resources.

3. The method of claim 1, wherein the SIB instruction instructs the UE (10) to periodically transmit, to the wireless communication network (11), the indication that the cell reselection criteria are satisfied, so long as the cell reselection criteria remain satisfied, and to suspend all uplink transmissions other than Hybrid Automatic Repeat Request, HARQ, retransmissions until the completion of a cell reselection procedure.

4. The method of claim 1, further comprising receiving data on a HS-DSCH, wherein the SIB instruction further indicates that the cell reselection criteria has been satisfied when a time elapsed since the last data reception at the UE (10) is less than a value of a broadcast parameter.

5. The method of any one of claims 1-4, further **characterized by**:
performing a cell reselection procedure in response to receiving a reconfiguration message from the wireless communication network (11); and
receiving, from the wireless communication network (11), a configuration including a measurement identity, wherein the Measurement Report message further includes the measurement identity.

6. The method of claim 1, further **characterized by**:
performing a cell reselection procedure in response to receiving a reconfiguration message from the wireless communication network (11), wherein the Scheduling Information is included in a MAC-i Protocol Data Unit, PDU, transmitted by the UE (10), and wherein the Scheduling Information containing at least following fields:
UE Power Headroom, UPH,
Total E-DCH Buffer Status, TEBS,
the HLBS, and
the HLID.

7. A User Equipment, UE (10), operative in a CELL_FACH state with High-Speed Downlink Shared Channel, HS-DSCH, transmissions in a wireless communication network (11), the UE (10) **characterized by**:
radio circuits including a transceiver (38) operative to wirelessly communicate with one or more Node-Bs (14, 18);
a memory (36) operative to store software (42); and
a processor (34) operatively connected to the memory (36) and the transceiver (38) and operative to:
receive cell reselection criteria in a System Information Broadcast, SIB, instruction from the wireless communication network (11), the SIB instruction instructing the UE (10) to report to the wireless communication network (11) whenever the cell reselection criteria are satisfied;
monitor neighboring cells (16) for possible cell reselection; and
transmit, to the wireless communication network (11), an indication that the cell reselection criteria are satisfied, in response to the SIB instruction,
wherein the indication is transmitted to a radio network controller, RNC, (20) for allowing the RNC (20) to indicate to a Node-B (14, 18) to release common Enhanced-Dedicated Channel, E-DCH, resources allocated to the UE (10), wherein the indication that the cell reselection criteria are satisfied is indicated by transmitting, by the UE (10), an event triggered "cell reselection" in a Measurement Report message, and wherein transmission of a cell reselection indicator in Highest priority Logical channel Buffer Status, HLBS, and/or Highest priority Logical channel ID, HLID, fields of Scheduling Information is triggered by the transmission of the event triggered Measurement Report message.

8. The UE (10) of claim 7, wherein the SIB instruction further indicates that the cell reselection criteria has been satisfied only when the UE (10) acquires the common E-DCH resources.

9. The UE (10) of claim 7, wherein the SIB instruction instructs the UE (10) to periodically transmit to the wireless communication network (11) the indication that the cell reselection criteria are satisfied, so long as the cell reselection criteria remain satisfied, and to suspend all uplink transmissions other than Hybrid Automatic Repeat Request, HARQ, retransmissions until the completion of a cell reselection procedure.

10. The UE (10) of claim 9, wherein the processor (34) is further operative to:
receive data on a HS-DSCH, and wherein the SIB instruction further indicates that the cell reselection criteria has been satisfied when a time elapsed since the last data reception at the UE (10) is less than a value of a broadcast parameter.

11. The UE (10) of any of claims 7-10, wherein the processor (34) is further operative to perform a cell reselection procedure upon a reception of a reconfiguration message from the wireless communication network (11).

## Patentansprüche

1. Verfahren, durch ein Benutzergerät, UE, (10) in einem CELL_FACH-Zustand, wobei Übertragungen des gemeinsamen Hochgeschwindigkeits-Abwärtskanals (HS-DSCH) in einem Drahtloskommunikationsnetz (11) betriebsfähig sind, wobei das Verfahren durch Folgendes gekennzeichnet ist:
Empfangen von Zellenneuauswahlkriterien in einer Anweisung zum Systeminformations-Broadcast (SIB) von dem Drahtloskommunikationsnetz (11), wobei die SIB-Anweisung das UE (10) zum Melden an das Drahtloskommunikationsnetz (11) anweist, wenn die Zellenneuauswahlkriterien erfüllt sind;
Überwachen benachbarter Zellen (16) auf eine mögliche Zellenneuauswahl; und
Übertragen einer Anzeige, dass die Zellenneuauswahlkriterien erfüllt wurden, als Reaktion auf die SIB-Anweisung an das Drahtloskommunikationsnetz (11),
wobei die Anzeige in eine Funknetzsteuerung (RNC) (20) übertragen wird, damit die RNC (20) einer Basisstation anzeigt, die dem UE (10) zugewiesenen Ressourcen des gemeinsamen erweiterten dezidierten Kanals (E-DCH) freizugeben, wobei die Anzeige, dass die Zellenneuauswahlkriterien erfüllt sind, durch Übertragen eines Ereignisses, das die "Zellenneuauswahl" ausgelöst hat, in einer Messberichtnachricht durch das UE (10) angezeigt ist, und wobei das Übertragen einer Zellenneuauswahlanzeige in Feldern des Pufferstatus des logischen Kanals höchster Priorität (HLBS) und/oder der Kennung des logischen Kanals höchster Priorität (HLID) von Planungsinformationen durch die Übertragung des durch die Messberichtnachricht ausgelösten Ereignisses ausgelöst wird.

2. Verfahren nach Anspruch 1, wobei die SIB-Anweisung ferner anzeigt, dass die Zellenneuauswahlkriterien nur dann erfüllt wurden, wenn das UE (10) die gemeinsamen E-DCH-Ressourcen erwirbt.

3. Verfahren nach Anspruch 1, wobei die SIB-Anweisung das UE (10) dazu anweist, die Anzeige, dass die Zellenneuauswahlkriterien erfüllt sind, periodisch an das Drahtloskommunikationsnetz (11) zu übertragen, solange die Zellenneuauswahlkriterien erfüllt bleiben, und alle Aufwärtsübertragungen, die keine Neuübertragungen der hybriden automatischen Wiederholungsanforderung (HARQ) sind, bis zum Abschluss einer Zellenneuauswahlprozedur auszusetzen.

4. Verfahren nach Anspruch 1, ferner umfassend Empfangen von Daten in einem HS-DSCH, wobei die SIB-Anweisung ferner anzeigt, dass die Zellenneuauswahlkriterien erfüllt wurden, wenn eine seit dem letzten Datenempfang an dem UE (10) verstrichene Zeit geringer als ein Wert eines Broadcast-Parameters ist.

5. Verfahren nach einem der Ansprüche 1-4, ferner **gekennzeichnet durch**:
Durchführen einer Zellenneuauswahlprozedur als Reaktion auf das Empfangen einer Neukonfigurationsnachricht von dem Drahtloskommunikationsnetz (11); und
Empfangen einer Konfiguration von dem Drahtloskommunikationsnetz (11), die eine Messidentität beinhaltet, wobei die Messberichtsnachricht ferner die Messidentität beinhaltet.

6. Verfahren nach Anspruch 1, ferner **gekennzeichnet durch**:
Durchführen einer Zellenneuauswahlprozedur als Reaktion auf das Empfangen einer Neukonfigurationsnachricht von dem Drahtloskommunikationsnetz (11), wobei die Planungsinformationen in einer MAC-i-Protokolldateneinheit (PDU) enthalten sind, die durch das UE (10) übertragen wird, und wobei die Planungsinformationen mindestens folgende Felder enthalten:
Leistungsreserven des UE (UPH),
E-DCH-Gesamtpufferstatus (TEBS),
den HLBS und
die HLID.

7. Benutzergerät, UE (10), das in einem ZELL_FACH-Zustand mit Übertragungen des gemeinsamen Hochgeschwindigkeits-Abwärtskanals (HS-DSCH) in einem Drahtloskommunikationsnetz (11) betriebsfähig ist, wobei das UE (10) durch Folgendes gekennzeichnet ist:
Funkverbindungen, die ein Sende-Empfangsgerät (38) beinhalten, das betriebsfähig ist, um mit einem oder mehreren Knoten-B (14, 18) drahtlos zu kommunizieren;
einen Speicher (36), der betriebsfähig ist, um Software (42) zu speichern; und
einen Prozessor (34), der mit dem Speicher (36) und dem Sende-Empfangsgerät (38) wirkverbunden ist und zu Folgendem betriebsfähig ist:
Empfangen von Zellenneuauswahlkriterien in einer Anweisung zum Systeminformations-Broadcast (SIB) von dem Drahtloskommunikationsnetz (11), wobei die SIB-Anweisung das UE (10) zum Melden an das Drahtloskommunikationsnetz (11) anweist, wenn die Zellenneuauswahlkriterien erfüllt sind;
Überwachen benachbarter Zellen (16) auf eine mögliche Zellenneuauswahl; und
Übertragen einer Anzeige, dass die Zellenneuauswahlkriterien erfüllt wurden, als Reaktion auf die SIB-Anweisung an das Drahtloskommunikationsnetz (11),
wobei die Anzeige in eine Funknetzsteuerung (RNC) (20) übertragen wird, damit die RNC (20) einem Knoten-B (14, 18) anzeigt, die dem UE (10) zugewiesenen Ressourcen des gemeinsamen erweiterten dezidierten Kanals (E-DCH) freizugeben, wobei die Anzeige, dass die Zellenneuauswahlkriterien erfüllt sind, durch Übertragen eines Ereignisses, das die "Zellenneuauswahl" ausgelöst hat, in einer Messberichtnachricht durch das UE (10) angezeigt ist, und wobei das Übertragen einer Zellenneuauswahlanzeige in Feldern des Pufferstatus des logischen Kanals höchster Priorität (HLBS) und/oder der Kennung des logischen Kanals höchster Priorität (HLID) von Planungsinformationen durch die Übertragung des durch die Messberichtnachricht ausgelösten Ereignisses ausgelöst wird.

8. UE (10) nach Anspruch 7, wobei die SIB-Anweisung ferner anzeigt, dass die Zellenneuauswahlkriterien nur dann erfüllt wurden, wenn das UE (10) die gemeinsamen E-DCH-Ressourcen erwirbt.

9. UE (10) nach Anspruch 7, wobei die SIB-Anweisung das UE (10) anweist, die Anzeige, dass die Zellenneuauswahlkriterien erfüllt sind, periodisch an das Drahtloskommunikationsnetz (11) zu übertragen, solange die Zellenneuauswahlkriterien erfüllt bleiben, und alle Aufwärtsübertragungen, die keine Neuübertragungen der hybriden automatischen Wiederholungsanforderung (HARQ) sind, bis zum Abschluss einer Zellenneuauswahlprozedur auszusetzen.

10. UE (10) nach Anspruch 9, wobei der Prozessor (34) ferner zu Folgendem betriebsfähig ist:
Empfangen von Daten in einem HS-DSCH, und wobei die SIB-Anweisung ferner anzeigt, dass die Zellenneuauswahlkriterien erfüllt wurden, wenn eine seit dem letzten Datenempfang an dem UE (10) verstrichene Zeit geringer als ein Wert eines Broadcast-Parameters ist.

11. UE (10) nach einem der Ansprüche 7-10, wobei der Prozessor (34) ferner betriebsfähig ist, um eine Zellenneuauswahlprozedur bei Empfang einer Neukonfigurationsnachricht von dem Drahtloskommunikationsnetz (11) durchzuführen.

## Revendications

1. Procédé, par un équipement utilisateur, UE, (10) dans un état CELL_PATCH avec transmissions de Canal partagé en liaison descendante haut débit, HS-DSCH, étant opérationnelles dans un réseau de communication sans fil (11), le procédé **caractérisé par** :
la réception de critères de resélection de cellule dans une instruction de Système de radiodiffusion d'informations, SIB, du réseau de communication sans fil (11), l'instruction SIB instruisant l'UE (10) de signaler au réseau de communication sans fil (11) si les critères de resélection de cellule sont remplis ;
la surveillance de cellules avoisinantes (16) pour une possible resélection de cellule ; et
la transmission, au réseau de communication sans fil (11), d'une indication que les critères de resélection de cellule sont remplis, en réponse à l'instruction SIB,
dans lequel l'indication est transmise à un contrôleur de réseau radio, RNC, (20) pour autoriser le RNC (20) à indiquer à une station de base de libérer des ressources de Canal dédié amélioré, E-DCH, communes allouées à l'UE (10), dans lequel l'indication que les critères de resélection de cellule sont remplis est indiquée en transmettant, par l'UE (10), une « resélection de cellule » déclenchée par un événement dans un message de Rapport de mesure, et dans lequel la transmission d'un indicateur de resélection de cellule dans des champs État de tampon de canal logique de première priorité, HLBS, et/ou ID de canal logique de première priorité, HLID, d'Informations de planification est déclenchée par la transmission du message de Rapport de mesure déclenché par un événement.

2. Procédé selon la revendication 1, dans lequel l'instruction SIB indique en outre que les critères de resélection de cellule ont été remplis uniquement lorsque l'UE (10) acquiert les ressources E-DCH communes.

3. Procédé selon la revendication 1, dans lequel l'instruction SIB instruit l'UE (10) de transmettre périodiquement au réseau de communication sans fil (11), l'indication que les critères de resélection de cellule sont remplis, tant que les critères de resélection de cellule restent remplis, et de suspendre toutes les transmissions en liaison montante autres que des retransmissions de Requête à répétition automatique hybride, HARQ, jusqu'à l'achèvement d'une procédure de resélection de cellule.

4. Procédé selon la revendication 1, comprenant en outre la réception de données sur un HS-DSCH, dans lequel l'instruction SIB indique en outre que les critères de resélection de cellule ont été remplis lorsqu'une durée écoulée depuis la dernière réception de données au niveau de l'UE (10) est inférieure à une valeur d'un paramètre de diffusion.

5. Procédé selon une quelconque des revendications 1 à 4, **caractérisé en outre par** :
la réalisation d'une procédure de resélection de cellule en réponse à la réception d'un message de reconfiguration du réseau de communication sans fil (11) ; et
la réception, du réseau de communication sans fil (11), d'une configuration incluant une identité de mesure, dans lequel le message de Rapport de mesure inclut en outre l'identité de mesure.

6. Procédé selon la revendication 1, **caractérisé en outre par** :
la réalisation d'une procédure de resélection de cellule en réponse à la réception d'un message de reconfiguration du réseau de communication sans fil (11), dans lequel les Informations de planification sont incluses dans une Unité de données de protocole, PDU, Mac-i, transmise par l'UE (10), et dans lequel les Informations de planification contenant au moins les champs suivants :
Réserve de puissance d'UE, UPH,
État de tampon E-DCH total, TEBS,
le HLBS, et
le HLID.

7. Équipement utilisateur, UE (10), opérationnel dans un état CELL_PATCH avec transmissions de Canal partagé en liaison descendante haut débit, HS-DSCH, dans un réseau de communication sans fil (11), l'UE (10) **caractérisé par** :
des circuits radio incluant un émetteur-récepteur (38) opérationnel pour communiquer de manière sans fil avec un ou plusieurs Nœuds-B (14, 18) ;
une mémoire (36) opérationnelle pour stocker un logiciel (42) ; et
un processeur (34) connecté de manière opérationnelle à la mémoire (36) et l'émetteur-récepteur (38) et opérationnel pour :
recevoir des critères de resélection de cellule dans une instruction de Système de radiodiffusion d'informations, SIB, du réseau de communication sans fil (11), l'instruction SIB instruisant l'UE (10) de signaler au réseau de communication sans fil (11) si les critères de resélection de cellule sont remplis ;
surveiller des cellules avoisinantes (16) pour une possible resélection de cellule ; et
transmettre, au réseau de communication sans fil (11), une indication que les critères de resélection de cellule sont remplis, en réponse à l'instruction SIB,
dans lequel l'indication est transmise à un contrôleur de réseau radio, RNC, (20) pour autoriser le RNC (20) à indiquer à un Nœud-B (14, 18) de libérer des ressources de Canal dédié amélioré, E-DCH, communes allouées à l'UE (10), dans lequel l'indication que les critères de resélection de cellule sont remplis est indiquée en transmettant, par l'UE (10), une « resélection de cellule » déclenchée par un événement dans un message de Rapport de mesure, et dans lequel la transmission d'un indicateur de resélection de cellule dans des champs État de tampon de canal logique de première priorité, HLBS, et/ou ID de canal logique de première priorité, HLID, d'Informations de planification est déclenchée par la transmission du message de Rapport de mesure déclenché par un événement.

8. UE (10) selon la revendication 7, dans lequel l'instruction SIB indique en outre que les critères de resélection de cellule sont remplis uniquement lorsque l'UE (10) acquiert les ressources E-DCH communes.

9. UE (10) selon la revendication 7, dans lequel l'instruction SIB instruit l'UE (10) de transmettre périodiquement au réseau de communication sans fil (11) l'indication que les critères de resélection de cellule sont remplis, tant que les critères de resélection de cellule restent remplis, et de suspendre toutes les transmissions en liaison montante autres que des retransmissions de Requête à répétition automatique hybride, HARQ, jusqu'à l'achèvement d'une procédure de resélection de cellule.

10. UE (10) selon la revendication 9, dans lequel le processeur (34) est en outre opérationnel pour :
recevoir des données sur un HS-DSCH, et dans lequel l'instruction SIB indique en outre que les critères de resélection de cellule ont été remplis lorsqu'une durée écoulée depuis la dernière réception de données au niveau de l'UE (10) est inférieure à une valeur d'un paramètre de diffusion.

11. UE (10) selon une quelconque des revendications 7 à 10, dans lequel le processeur (34) est en outre opérationnel pour réaliser une procédure de resélection de cellule lors d'une réception d'un message de reconfiguration du réseau de communication sans fil (11).
